# EUROPEAN PATENT APPLICATION

(11) **EP 1 315 023 A1**
(43) Date of publication of application: **28.05.2003**
(21) Application number: 02252756.8
(22) Date of filing: 18.04.2002
(51) Int. Cl.: G02F 1/139

(54) **Reflective liquid crystal display system with improved photopic contrast and method of manufacturing the same**

(30) Priority: 21.11.2001 US 990635
(71) Applicant: Three-Five Systems, Inc., Tempe, AZ 85281-1230 (US)
(72) Inventor: Vithana, Hemasiri, Chandler, Arizona 85226 (US)
(74) Representative: Beresford, Keith Denis Lewis

(57) **Abstract**

A liquid crystal display system includes a reflective liquid crystal display comprising a first orientation layer to impart a first direction (502) to a first region of a liquid crystal material and a second orientation layer to impart a second direction (504) to a second region of the liquid crystal material. A light source is optically coupled to provide linearly-polarized light, having a polarization direction (506), to the liquid crystal display. A viewing screen is optically coupled to receive light from the liquid crystal display. The first orientation direction and the second orientation direction are each rotationally offset by an rotational offset angle (508) from an optical mode (404,406) of the liquid crystal display in which the polarization direction bisects a twist angle defined by the first orientation direction and the second orientation direction of the orientation layers.

## Description

The present invention relates in general to reflective liquid crystal display systems and, more particularly, to reflective liquid crystal micro-display systems using a rotational offset angle to improve photopic contrast.

Projection display systems commonly use a light valve such as a liquid crystal display (LCD) to create images that are enlarged and projected onto a screen for viewing. Recently, reflective micro-displays have become increasingly popular as a preferred light valve for projection display applications. Typically, but not always, three micro-displays are used in a projection system, one for each of the primary colors of red, green, and blue. Other uses of such micro-displays include direct viewers for personal devices such as cell phones and personal digital assistants.

An important performance characteristic of projection and other display systems is the contrast of the image presented to a user on a screen or viewing display. It is preferred that the contrast be high so that the user perceives an attractive image. However, one phenomenon that limits this contrast is the interference between reflected light rays from different surfaces of the micro-display in the dark state.

In a typical reflective micro-display, the bottom reflective substrate has a mirror surface such as aluminum with a dielectric stack formed on the aluminum surface. The dielectric stack is typically formed by a few alternating layers of metal oxides with different refractive indices. The dielectric stack is used to enhance the reflectivity of the mirror surface over the visible region of the light spectrum. Light entering through the front surface of the micro-display is reflected to varying extents at each of the different interfaces in the micro-display, such as the air/glass, polyimide/liquid crystal, and other interfaces, due to differences in the refractive indices of the respective adjacent layers. These reflected light rays combine with one another and the primary reflected light from the reflective surface in a manner such that they interfere with each other to create interference patterns.

The light incident on the micro-display is generally polarized to be either S-type or P-type. In an ideal situation, the polarized light is reflected back with a complete change in the polarization type from one type to another, for example, when the micro-display is in an off state for a normally-white mode display. However, in actual micro-display applications, several interfaces within the micro-display deviate from ideal conditions. In particular, liquid crystal molecules close to the orientating surfaces, such as a polyimide layer, do not respond in a ideal way to an applied electric field due to surface interactions between the liquid crystal molecules and the surface. This condition leaves a thin liquid crystal layer close to the orienting surface that is different from the rest of the liquid crystal slab. Thus, depolarization occurs during reflections from the polyimide/liquid crystal interface and results in a small amount of light with an undesired polarization direction. Surface imperfections and manufacturing tolerances also contribute to this depolarization effect. In the dark state of the display, light components with an undesired polarization direction may interfere with one other and produce interference patterns on the viewing screen.

A significant problem with these interference patterns, particularly in the dark state, is that their amplitudes may be sufficient to have an adverse effect throughout the visible light spectrum. The contrast for a micro-display is generally defined by the ratio of the bright to the dark states of the micro-display. The interference peaks are sufficiently large compared to the dark state reflectivity that they reduce the contrast over portions of the visible spectrum, and thus reduce the overall average contrast of the projection system such that a user is able to perceive poorer contrast.

Prior approaches to reducing the amplitude of the interference patterns in micro-displays include selecting materials with differing refractive indices and differing thicknesses, and increasing the number of layers in the dielectric stack. However, such approaches can negatively impact the overall reflectivity of the micro-display and increase manufacturing cost.

Another prior approach is the attachment of external retarders, such as a polycarbonate layer added on top of the micro-display, with appropriately selected retardation values. However, the use of such retarders requires adding another manufacturing step and also requires a fairly high degree of alignment accuracy such that achieving adequate manufacturing reliability would be difficult.

In light of the foregoing, there is a need for a method and apparatus for reducing the amplitudes of interference patterns of the dark state of micro-displays to provide improved contrast. There is a further need for such a method and apparatus that does not significantly impact other performance characteristics of the micro-display, increase manufacturing costs, or reduce reliability.

For a more complete understanding of the present invention, an embodiment will now be described with reference to the following figures, wherein like reference numbers refer to similar items throughout the figures:
FIG. 1 illustrates a liquid crystal projection display system according to an embodiment of the present invention operating in a bright state;
FIG. 2 illustrates the liquid crystal projection display system of FIG. 1 operating in a dark state;
FIG. 3 illustrates a cross-sectional view of a liquid crystal display used in the projection display system of FIGS. 1 and 2;
FIG. 4 illustrates the bisecting of a twist angle, as determined, for example, by the rubbing directions of orientation layers, by a polarization direction of the incoming light in a self-compensating optical mode for a liquid crystal display;
FIG. 5 illustrates a rotational offset angle according to the embodiment of the present invention from the optical mode of FIG. 4;
FIG. 6 illustrates the definition of relative positive and negative directions for the rotational offset angle of FIG. 5;
FIG. 7 illustrates a pixel array of the liquid crystal display of FIG. 3 relative to the polarization direction of the incoming light and rubbing angles according to an embodiment of the present invention;
FIG. 8 is a graph illustrating reflectivity versus wavelength for zero and optimal offset angles for a liquid crystal display having a one-layer dielectric stack and tuned for the color blue according to an embodiment of the present invention;
FIG. 9 is a graph illustrating reflectivity versus wavelength for zero and optimal offset angles for a liquid crystal display having a four-layer dielectric stack and tuned for the color red according to an embodiment of the present invention;
FIG. 10 is a graph illustrating reflectivity versus wavelength for zero and optimal offset angles for a liquid crystal display without a dielectric stack and tuned for the color green according to an embodiment of the present invention; and
FIG. 11 is a graph illustrating photopic contrast versus angle of rotation for varying dark state voltages for a liquid crystal display tuned for the color green according to an embodiment of the present invention.

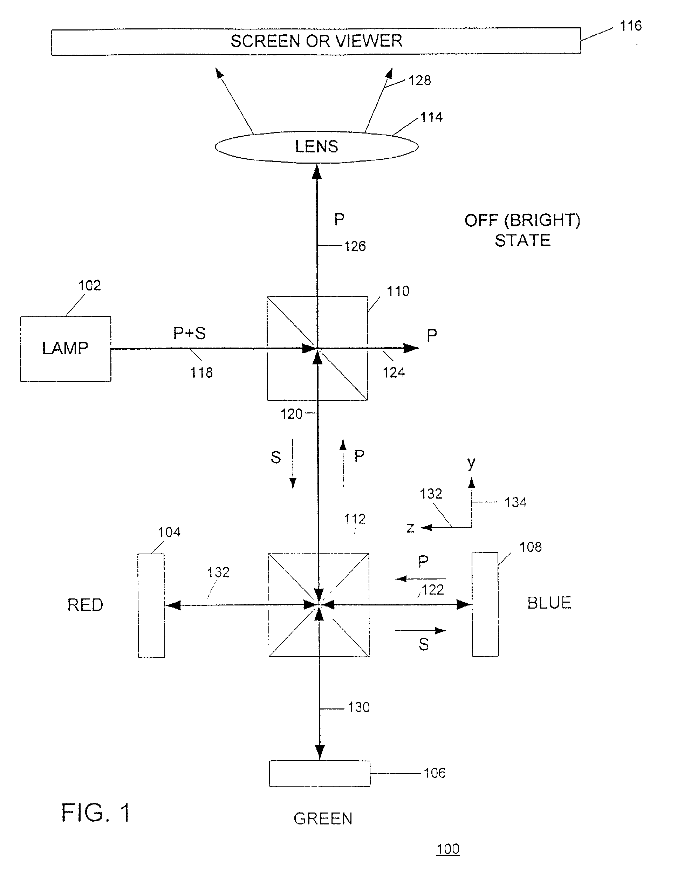

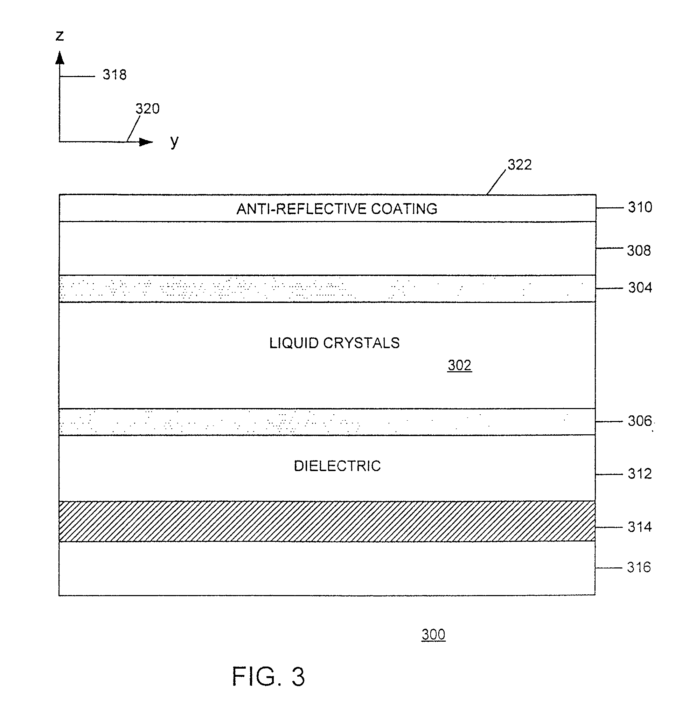

FIG. 1 illustrates a liquid crystal projection display system 100, for example a projection television system, according to an embodiment of the present invention. System 100 comprises a light source 102 optically coupled to provide light to three liquid crystal displays 104, 106, and 108. Light source 102 is, for example, an ultrahigh pressure (UHP) mercury lamp, and liquid crystal displays (LCDs) 104, 106, and 108 are, for example, twisted nematic reflective LCDs. It should be noted that many other types of light sources may also be used. Also, it should be noted for later discussion that z and y coordinate directions 132 and 134 are shown relative to LCD 108 and correspond to directions 318 and 320 discussed below with reference to FIG. 3.

A polarizing beam splitter 110 receives non-polarized white light 118 from light source 102 and splits light 118 into two linearly-polarized components, an S-component, which corresponds to polarized light 120, and a P-component 124. Splitter 110 transmits the P-type component (indicated as ray 124), and reflects the S-type component (indicated as ray 120).

Polarizing beam splitter 110 provides linearly-polarized light 120 to a conventional color splitter or separator 112, which splits linearly-polarized light 120 into three major color components 122, 130, and 132 (for example, red, green and blue) each with the same direction of polarization relative to each component's respective LCD. Each of LCDs 104, 106, and 108 is arranged to receive the corresponding color component as indicated in FIG. 1.

Each of LCDs 104, 106, and 108 receives S-type light in one of the three primary colors discussed above. FIG. 1 illustrates system 100 in an off state in which the behavior of light is shown for an LCD that is not biased. Each LCD is also designed to act as a so-called quarter-wave plate (in which the product of the thickness and birefringence of the liquid crystal material are designed to substantially equal λ/4, where λ is the wavelength of the incoming light color received by the respective LCD).

As is known, a quarter-wave plate changes linearly-polarized light to circularly-polarized light upon passing through it. In the off state, S-type polarized light received by each LCD 104, 106, and 108 is converted into circularly-polarized light upon initially passing through LCDs 104, 106, and 108. As is also known, circularly-polarized light changes its handedness (left-circular to right-circular or vice versa) upon reflecting from a mirror surface. As such, reflected circularly-polarized light from the mirror surface of each LCD 104, 106 and 108 changes its handedness (left-to-right or right-to-left) and passes through the respective LCD 104, 106 or 108 again to exit as linearly-polarized light with an opposite direction of polarization, which is P-type in this case.

In the off state, each LCD 104, 106, and 108 changes the direction of polarization and reflects the incoming respective color light component back towards color separator 112 with a P-type polarization. Each of the reflected color components are recombined by color separator 112 and provided back to beam splitter 110 along ray 120 as P-type polarized light. As will be appreciated by one of skill in the art, each of LCDs 104, 106, and 108 comprises a pixel array (not shown) in which certain pixels are selectively turned off to create an image corresponding to one of the three primary colors. The corresponding color images from each LCD are recombined into a single image by color separator 112.

Splitter 110 transmits P-type light and thus provides the combined color image received from color separator 112 as light ray 126. A lens 114 receives light ray 126 and provides light rays 128 as an enlarged image on a viewing display or screen 116 such as, for example, a screen in a projection television system or a direct viewer display in a cell phone or other personal digital assistant device. Because light corresponding to pixels in the pixel arrays that are in an off state is provided as an image on viewing display 116, the pixels in such an off state are also referred to as being in a bright state. It should be noted, however, that in other embodiments the bright state of system 100 may correspond to an on state of the LCDs.

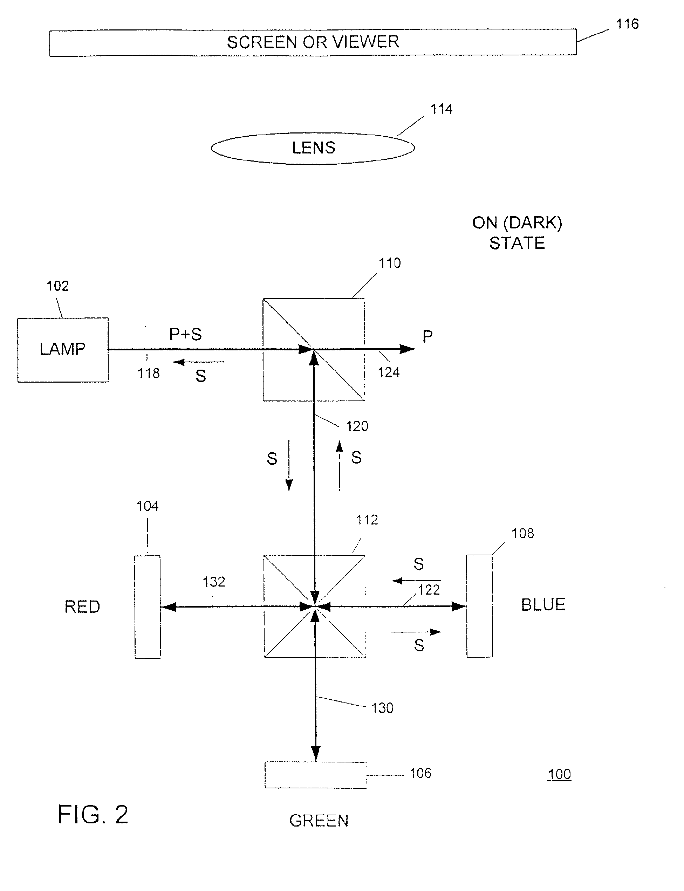

FIG. 2 illustrates LCD system 100 of FIG. 1 for pixels that are selectively turned on and are operating in a dark state (in which light returned from the on pixels is not provided to viewing display 116). More specifically describing such dark state operation, each LCD 104, 106, and 108 receives light having an S-type polarization as described above. However, for those pixels in the pixel array (not shown) of each LCD that are selectively turned on by application of an electric field, substantially no retardation is imparted to the incoming light 122, 130, and 132. Thus, S-type linearly-polarized light passes through LCDs 104, 106, and 108 without changing to circularly-polarized light as described above and remains as S-type polarized light. As is known, linearly-polarized light reflects from a mirror surface without changing the direction of polarization. Hence, incoming S-type linearly-polarized light rays 122, 130 and 132 each reflect back from the mirror surfaces of the respective LCDs and exit with the same S-type linear polarization. Color separator 112 recombines each S-type component into combined S-type light ray 120. Splitter 110, operating as discussed above, reflects S-type ray 120 back along ray 118 towards light source 102 so that substantially no light reaches viewing display 116.

The contrast of the image provided on viewing display 116 is defined by the ratio of the bright state to the dark state. Further, this contrast typically varies across the visible spectrum. A user of system 100 generally prefers that contrast be high. As is known, the response of the human eye varies somewhat for different portions of the visible spectrum and such variations are defined by standard photopic response tables maintained by the National Bureau of Standards. Because of this human perception, the contrast ratio defined above is typically adjusted by these photopic response tables to provide what is known as photopic contrast. Also, the improvement of photopic contrast is typically the most commercially significant objective as it impacts the viewer's perception of display performance. As will be discussed below, the present invention provides a method and apparatus to improve this photopic contrast across, for example, the visible spectrum. In other applications, the present invention may even be useful for non-visible light wavelengths.

FIG. 3 illustrates a cross-sectional view of a liquid crystal reflective display 300, which may be used, for example, as LCD 104, 106 or 108, for use in the liquid crystal projection display system 100 of FIGs. 1 and 2. Orientation layers 304 and 306 surround a liquid crystal material 302. Orientation layers 304 and 306 are, for example, polyimide layers each rubbed to impart a different orientation direction for the liquid crystal molecules and thus define a twist angle of the LCD. Other types of materials may be used for orientation layers 304 and 306, such as, for example, obliquely-evaporated SiOₓ layers. At the surface of orientation layers 304 and 306, liquid crystal molecules lie parallel to the surface along a given direction, usually along the rubbing direction in the case of a polyimide material and perpendicular to the direction of evaporation in SiOₓ layers (this type of alignment is commonly known by one of ordinary skill as parallel homogeneous alignment).

A transparent glass layer 308 and anti-reflective coating layer 310 are formed overlying orientation layer 304, and a dielectric stack or layer 312 is formed underlying orientation layer 306. Dielectric stack 312 typically comprises several layers of metal oxides such as, for example, silicon nitride and silicon oxide (e.g., silicon dioxide), but may also be simply a single layer of, for example, silicon dioxide. Other oxide layers may also be used in dielectric stack 312. A reflective layer 314 such as, for example, aluminum is formed underlying dielectric stack 312 and overlying a substrate 316, for example of silicon, in which passive or active matrix electronics (not shown) may be formed to drive a pixel array (not shown) in LCD 300.

It should be noted that z and y coordinate orientations or directions 318 and 320 are illustrated for the discussion to follow. Z direction 318 is normal to the surface 322 of coating 310, and y direction 320 is parallel to surface 322.

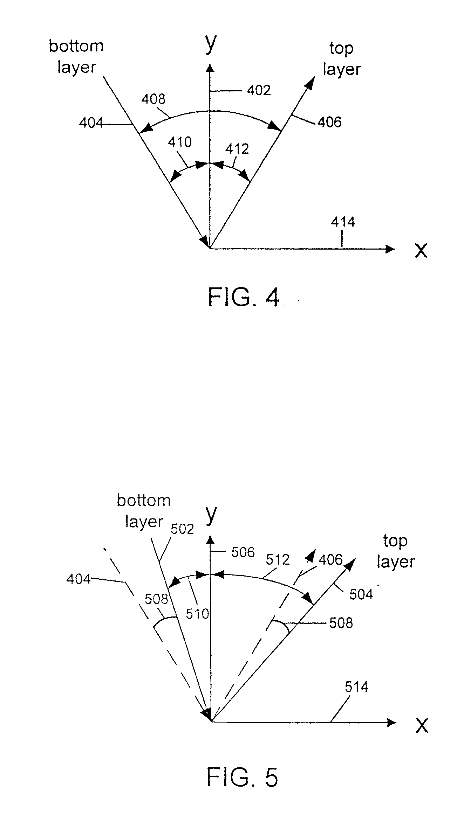

FIG. 4 illustrates the bisecting of a twist angle (as determined, for example, by the rubbing directions of the orientation layers in an LCD) by a direction of polarization of incoming light in a self-compensating twisted nematic (SCTN) optical mode for the LCD. More specifically, FIG. 4 illustrates rubbing directions 404 and 406 of top and bottom orientation layers in a conventional optical mode, for example, for a self-compensating twisted nematic LCD. Rubbing directions 404 and 406 correspond to the directions of rubbing done to, for example, polyimide layers during manufacture of the LCD. It should be noted that in addition to SCTN modes the above also describes, and the present invention as described herein is applicable to, other mixed-mode twisted nematic optical modes where the direction of polarization of incoming light is not either parallel or perpendicular to the rubbing direction of the front substrate. Examples of such other mixed-mode twisted nematic optical modes are discussed further in MIXED MODE TWISTED NEMATIC LIQUID CRYSTAL CELLS FOR REFLECTIVE DISPLAYS by Shin-Tson Wu and Chiung-Sheng Wu, Appl.Phys.Lett., 68(11), 11 March 1996, which is hereby incorporated in its entirety by reference herein.

As is conventional, directions 404 and 406 define a twist angle 408 (which is left-handed in this case). For a self-compensating optical mode, the direction of polarization of incoming light to the LCD (also referred to herein as the polarization direction of incoming light) bisects twist angle 408. Here, the polarization direction is coincident with y-axis 402.

It should be noted that rubbing directions 404 and 406 form rotational angles 410 and 412 relative to the polarization direction or y-axis 402. Angles 410 and 412 may each be, for example, 30 degrees and twist angle 408 be 60 degrees. Also, x-axis 414 is perpendicular to y-axis 402. Self-compensated twisted nematic liquid crystal displays are discussed further in U.S. Patent No. 5,490,003, issued Feb. 6, 1996, and titled REFLECTIVE LIQUID CRYSTAL DISPLAY DEVICE WITH TWIST ANGLE BETWEEN 50° AND 68° AND THE POLARIZER AT THE BISECTRIX, by Van Sprang, which is hereby incorporated in its entirety by reference herein.

FIG. 5 illustrates a rotational offset angle according to the present invention defined relative to the self-compensating twisted nematic optical mode shown in FIG. 4. More specifically, orientation directions 502 and 504 of orientation layers 304 and 306 are offset by a rotational angle 508 relative to the corresponding orientation directions 404 and 406 that would be used if LCD 300 were to be operated in a self-compensating optical mode as discussed above for FIG. 4. In contrast, according to the present invention, it has been discovered that using offset angle 508 from the conventional self-compensating optical mode significantly improves photopic contrast on viewing display 116.

By introducing offset angle 508 with respect to the direction of polarization of incoming light, reflected light having an undesirable component of polarization direction can be minimized by reducing the degree of depolarization occurring at the interfaces. The present invention may reduce the amplitudes of the corresponding interference pattern by an order of magnitude. Offset angle 508 may be, for example, greater than about 0.5 degrees and less than about 10 degrees, and more typically less than about 5 degrees. However, offset angle 508 may be greater than or less than these ranges in other cases depending in part on the type of dielectric stack and the optical mode used.

It should also be noted that in addition to self-compensating twisted nematic modes as described in more detail below, the present invention is generally applicable to the use of a rotational offset, which is defined by an offset angle as described herein, relative to an optical mode in which the first polarization direction of the incoming light to the display divides the twist angle (defined by the orientation directions of the orientation layers in the display) into two parts. In the case of a self-compensating twisted nematic mode, the twist angle is bisected (i.e., divided into two equal parts or angles). In the general case, however, the twist angle is divided into two unequal parts.

The direction of polarization of incoming color light components to LCDs 104, 106 and 108 corresponds to y-axis 506. Because of the introduction of offset angle 508, the polarization direction no longer bisects the twist angle defined by directions 502 and 504. Instead, angle 510 and angle 512 are different angles due to the offset, such as, for example, angles of 27 degrees and 33 degrees. It should be noted that y-axis 506 is the same direction as y-axis 320 of FIG. 3. Also, x-axis 514 is perpendicular to y-axis 506.

According to the present invention, offset angle 508 may be introduced into system 100, for example, by varying the rubbing directions used to impart orientation directions to orientation layers 304 and 306 during manufacture, or after manufacture of LCD 300 by rotating LCD 300 relative to polarization direction 506 to provide offset angle 508. Varying the rubbing angles is generally preferred over rotation of the entire LCD since alignment of LCDs 104, 106, and 108 is important for proper operation of system 100 and optimization of photopic contrast generally requires different offset angles for each color LCD as discussed further below.

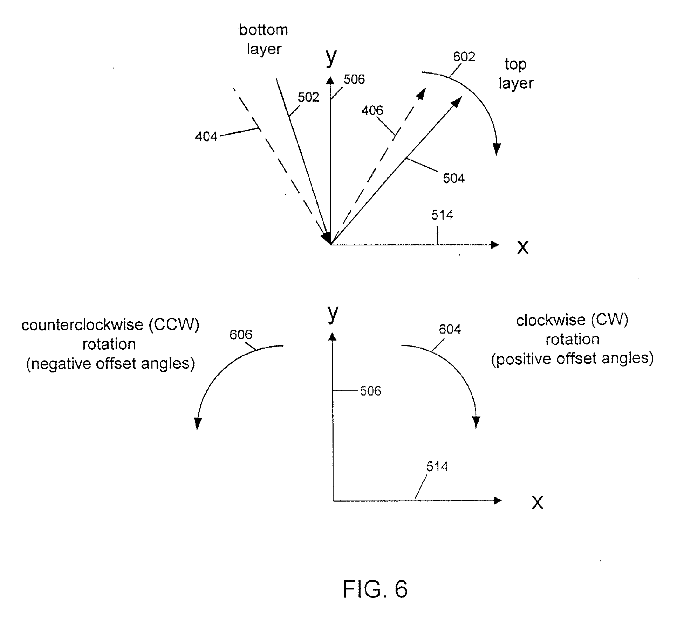

FIG. 6 illustrates the definition of relative positive and negative rotational directions 604 and 606 for the offset angle 508 of FIG. 5. These relative directions are arbitrary, are provided for later use in the discussion below, and could be reversed in other descriptions. As an example of the rotation discussed in FIG.5 above, directions 502 and 504 are rotated positively by offset angle 508 because the direction of rotation starting from the self-compensated twisted nematic mode defined by directions 404 and 406 is done in the same direction as direction 604 in FIG.6, which corresponds to a positive offset angle. Direction 604 may also be described as a clockwise rotation and direction 606 as a counter-clockwise rotation.

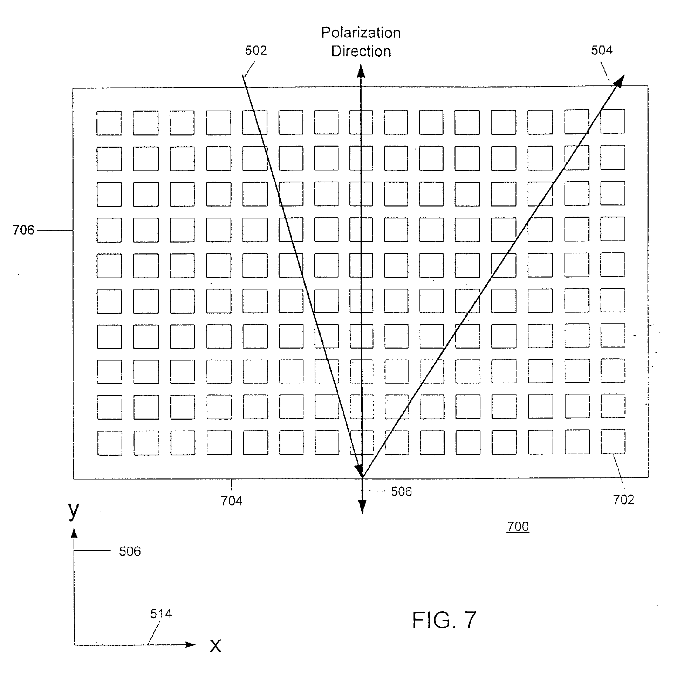

FIG. 7 illustrates a pixel array 700 of liquid crystal display 300 of FIG. 3 relative to the direction of polarization of incoming light and rubbing angles according to an embodiment of the present invention. Pixel array 700 comprises a plurality of pixels 702 generally arranged in rows and columns substantially aligned with y and x directions 506 and 514. Pixel array 700 may be formed in substrate 316 (see FIG. 3) using conventional techniques.

Edges 704 and 706 of pixel array 700 substantially correspond to and are substantially parallel with the rows and columns of pixels 702 and also are substantially aligned with y and x directions 506 and 514. Also, the rows and columns of pixels 702 are substantially aligned to be parallel or perpendicular, as illustrated, to polarization direction 506. Rubbing directions 502 and 504, which are imparted to orientation layers 304 and 306 during manufacture, are shown superimposed over pixel array 700. Directions 502 and 504 use the offset angle 508 and are in the same relative position to y and x directions 506 and 514 and polarization direction 506 in both FIGs. 5 and 7.

Pixel array 700 is preferably aligned as above for each of LCDs 104, 106, and 108 so that optical alignment of the color image component provided by each LCD is maintained relative to color separator 112 and the other components of system 100. According to the present invention, by maintaining a pixel array orientation for each LCD that maintains the system optical alignment and by introducing offset angle 508 by changing the rubbing directions of the orientation layers 304 and 306, photopic contrast for system 100 is improved (without the introduction of misalignment that would be caused by rotation of entire individual LCDs).

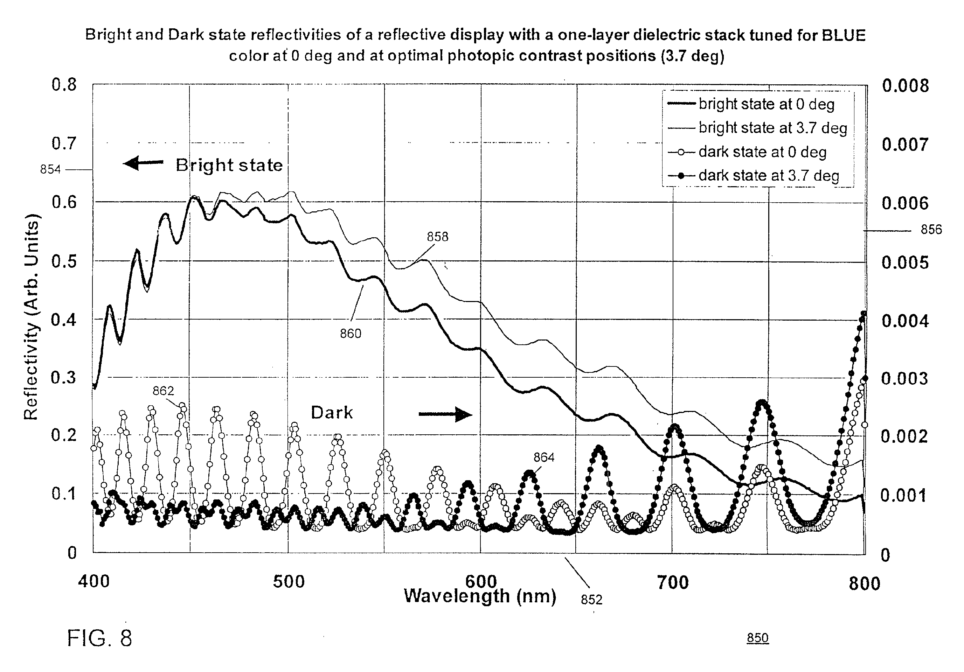

FIG. 8 is a graph 850 illustrating reflectivities for the bright state 854 and the dark state 856 (in standard arbitrary units) versus wavelength 852 (in nanometers) for zero and optimal offset angles of a reflective LCD having a one-layer dielectric stack and tuned for the color blue according to an embodiment of the present invention. More specifically, for the bright state, plot 860 illustrates the reflectivity for an offset angle of zero degrees as defined herein for the LCD, and plot 858 illustrates the reflectivity for an offset angle of 3.7 degrees, which is substantially the optimal offset angle to improve photopic contrast for this particular display. For the dark state, plot 862 illustrates reflectivity for an offset angle of zero degrees, and plot 864 illustrates reflectivity for the substantially optimal offset angle of 3.7 degrees. It should be noted that the amplitudes of the peaks of reflectivity plot 864 are decreased from plot 862 substantially in the wavelength range corresponding to blue light by use of the present invention.

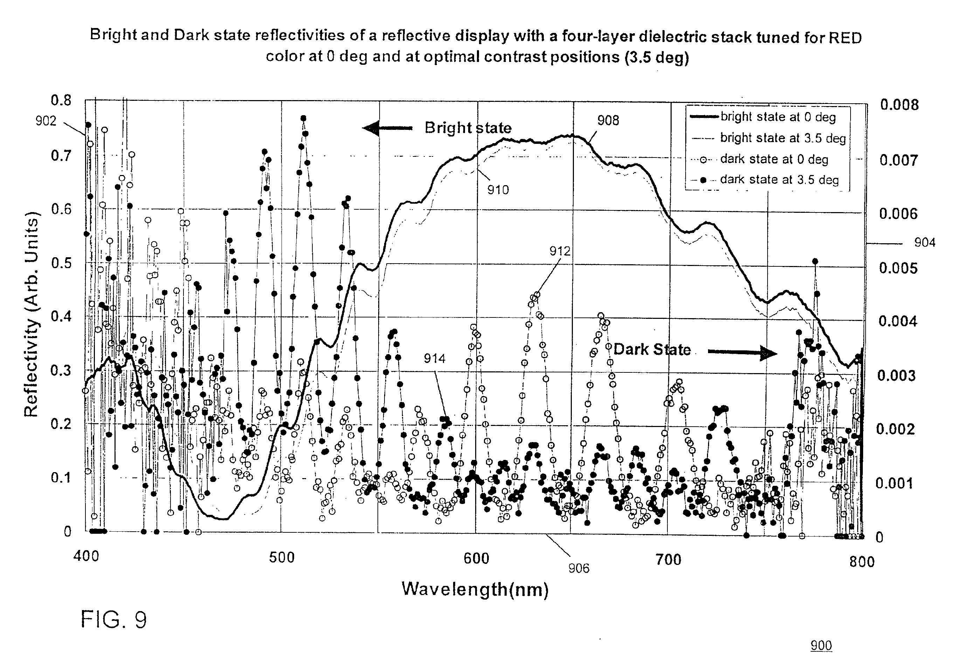

FIG. 9 is a graph 900 illustrating reflectivities for the bright state 902 and the dark state 904 (in standard arbitrary units) versus wavelength 906 (in nanometers) for zero and optimal offset angles of a reflective LCD having a four-layer dielectric stack and tuned for the color red according to an embodiment of the present invention. More specifically, for the bright state, plot 908 illustrates the reflectivity for an offset angle of zero degrees as defined herein for the LCD, and plot 910 illustrates the reflectivity for an offset angle of 3.5 degrees, which is substantially the optimal offset angle for this particular display. For the dark state, plot 912 illustrates reflectivity for an offset angle of zero degrees, and plot 914 illustrates reflectivity for the substantially optimal offset angle of 3.5 degrees. It should be noted that the amplitudes of the peaks of reflectivity plot 914 are decreased from plot 912 substantially in the wavelength range corresponding to red light by use of the present invention.

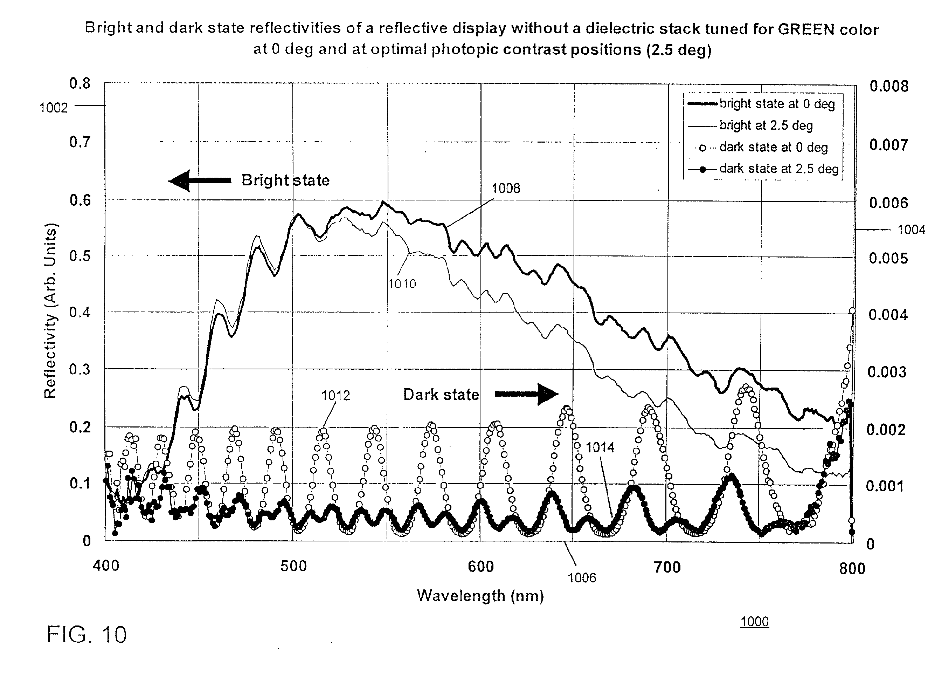

FIG. 10 is a graph 1000 illustrating reflectivities for the bright state 1002 and the dark state 1004 (in standard arbitrary units) versus wavelength 1006 (in nanometers) for zero and optimal offset angles of a reflective LCD without a dielectric stack and tuned for the color green according to an embodiment of the present invention. More specifically, for the bright state, plot 1008 illustrates the reflectivity for an offset angle of zero degrees as defined herein for the LCD, and plot 1010 illustrates the reflectivity for an offset angle of 2.5 degrees, which is substantially the optimal offset angle for this particular display. For the dark state, plot 1012 illustrates reflectivity for an offset angle of zero degrees, and plot 1014 illustrates reflectivity for the substantially optimal offset angle of 2.5 degrees. It should be noted that the amplitudes of the peaks of reflectivity plot 1014 are decreased from plot 1012 substantially in the wavelength range corresponding to green light by use of the present invention.

As noted above for FIGs. 8-10, the dark state reflectivity peak amplitudes are generally decreased by use of the present invention, and the most significant decreases generally correspond substantially to the color light range to which the LCD is tuned. For example, the dark state reflectivity peak amplitude reduction may range from about 25-80 percent in general, and more specifically from about 35-50 percent. According to the present invention, the most preferred or optimal offset angle may be determined experimentally by use of a number of LCDs each having a slightly different offset angle or by simulation. The optimal offset angle generally is that angle for which the photopic contrast is greatest without substantial loss of reflectivity of the bright state.

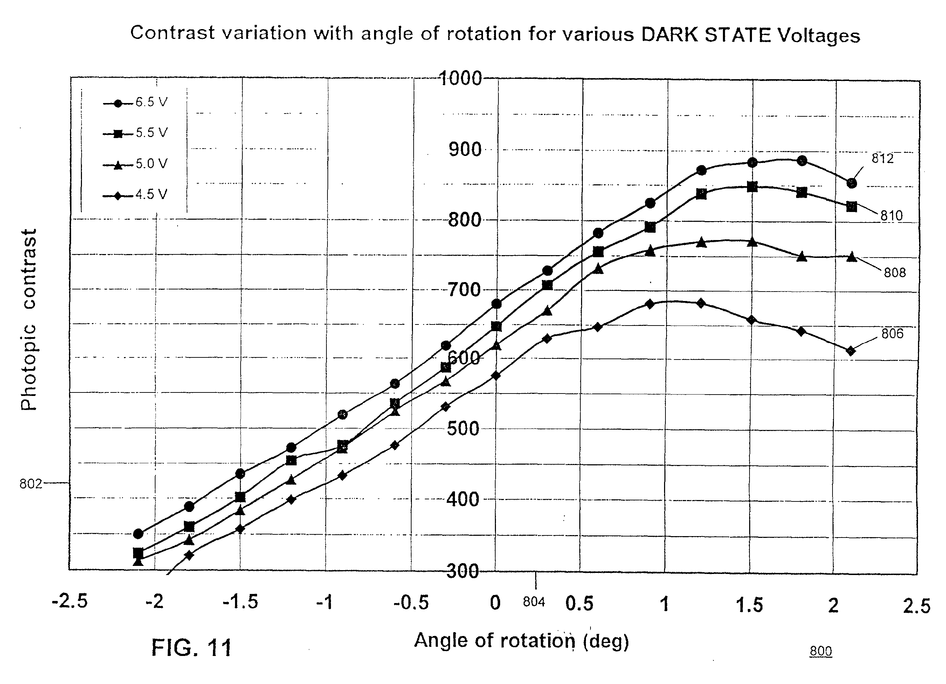

FIG. 11 is a graph 800 illustrating photopic contrast 802 of a self compensated twisted nematic LCD tuned for green color versus angle of rotation 804 (in degrees) for plots 806, 808, 810, and 812 corresponding to varying dark state or on state voltages for a liquid crystal display according to an embodiment of the present invention. The angle of rotation 804 has positive and negative values that correspond to offset angle 508 of FIG. 5 and the rotational definition of FIG. 6. A zero value of the angle of rotation corresponds to the photopic contrast exhibited in a self-compensating mode. The dark state or on state voltages of plots 806, 808, 810, and 812 correspond to the voltage selectively applied to certain pixels of the LCD to create a dark state in system 100 for those pixels. Specifically, plot 806 corresponds to an on state voltage of 4.5 V, plot 808 to 5.0 V, plot 810 to 5.5 V, and plot 812 to 6.5 V. Graph 800 is for an LCD operating at a temperature of 50 °C and having four layers of alternating SiO(x) and SiN films as its dielectric stack. The LCD thickness is about 3.8 microns (µm) and the LCD is filled with MLC-9000-100 liquid crystal material purchased form Merck Ltd.

As shown in FIG. 11 as the on state voltage increases, the photopic contrast 802 increases. Also, according to the present invention, as the offset angle 508 is increased from zero, the photopic contrast generally increases for all illustrated on state voltages and reaches a maximum between about 0.5 and 2.0 degrees depending on the particular dark state voltage. It should be noted that the offset angle sign and/or magnitude corresponding to a local maximum of photopic contrast will vary by the primary color wavelength of the LCD and other manufacturing characteristics such as, for example, the type of dielectric stack and the number of layers in the dielectric stack. For example, in another LCD under different operating conditions the maximum photopic contrast might fall within an offset angle range of 3 to 5 degrees. Also, in another example, each of the three LCDs for the three primary colors in another embodiment of system 100 had positive offset angles with red having the largest offset angle, blue the next largest offset angle, and green the smallest offset angle.

For some LCD designs it is desirable to limit the on state voltage for various reasons such as avoiding image sticking. According to the present invention, lower on state voltages can be used while still achieving the same photopic contrast that would have been achieved for operation in a self-compensating mode at a higher on state voltage. Also, according to a method of the present invention, a desired or necessary photopic contrast standard or lower limit for a design can be selected, for example as may be required of a supplier of LCDs by a projection display manufacturer. Then, by selecting and optimizing a combination of offset angle 508 and a lower on state voltage, the photopic contrast standard can be met with a lower on state voltage than the voltage an LCD operating in a corresponding self-compensating mode would require. This selection and optimization process can be done separately for each of the three primary color LCDs in system 100.

According to another method of the present invention, the photopic contrast plot or curve (similar to FIG. 11) for each of LCDs 104, 106, and 108 is individually adjusted to improve photopic contrast. For example, this improvement preferably comprises adjusting photopic contrast substantially to a maximum for the photopic contrast versus offset angle curve corresponding to the LCD. Typically, this curve will differ for the three different primary colors so that LCDs 104, 106, and 108 each have a different offset angle 508. For example, the offset angles 508 may vary by at least about 0.5 degrees between the different colors.

LCDs 300 are, for example, typically manufactured on silicon wafers. According to the present invention, a first wafer will contain only LCDs for a first primary color component, and thus all LCDs on the first wafer will be manufactured with the same offset angle 508. A second wafer with only LCDs for a second primary color component and a third wafer with only LCDs for a third primary color component are handled similarly.

By the foregoing description, a novel method and apparatus for a liquid crystal display system have been described. The present invention has the advantages of reducing the amplitude of interference patterns of the dark state spectrum in micro-displays to provide improved contrast. Further, the method and apparatus of the present invention do not significantly impact other performance characteristics of the liquid crystal display system. Also, manufacturing costs are not significantly increased, and manufacturing reliability is not affected.

Although specific embodiments have been described above, it will be appreciated that numerous modifications and substitutions of the invention may be made. For example, although a reflective self-compensated twisted nematic LCD system was described above, the present invention is also useful with other types of reflective LCD systems such as other mixed mode twisted nematic optical mode reflective LCD systems. Further, the present invention is useful in direct view display as well as projection display types of LCD systems. In addition, although the use of linearly-polarized light has been described above, it may be possible for non-linearly polarized light such as, for example, left or right-circularly polarized light, to be used in other embodiments, in which case it would be necessary to adjust the optical mode, cell thickness, and other properties of the LCD and the type of polarizers used in the system. Accordingly, the invention has been described by way of illustration rather than limitation.

## Claims

1. A liquid crystal display system comprising:
(a) a liquid crystal display comprising:
(a1) a liquid crystal material;
(a2) a first orientation layer to impart a first orientation direction to a first region of the liquid crystal material; and
(a3) a second orientation layer to impart a second orientation direction to a second region of the liquid crystal material;
(b) a light source;
(c) a viewing display optically coupled to receive light from the liquid crystal display; and
(d) wherein:
(d1) the liquid crystal display is optically coupled to the light source and is operable to receive incoming light, wherein the incoming light is polarized and has a polarization direction relative to the liquid crystal display; and
(d2) the first orientation direction and the second orientation direction are each rotationally offset from an optical mode of the liquid crystal display in which the polarization direction of the incoming light bisects a twist angle defined by the first orientation direction and the second orientation direction.

2. The liquid crystal display system of claim 1 wherein the liquid crystal display is a first liquid crystal display and the polarization direction is a first polarization direction, and further comprising:
(a) a second liquid crystal display comprising:
(a1) a liquid crystal material;
(a2) a first orientation layer to impart a first orientation direction to a first region of the liquid crystal material; and
(a3) a second orientation layer to impart a second orientation direction to a second region of the liquid crystal material; and
(b) wherein:
(b1) the first liquid crystal display is adapted to receive a first color light component;
(b2) the second liquid crystal display is optically coupled to the light source and is adapted to receive a second color light component;
(b3) the second color light component has a second polarization direction relative to the second liquid crystal display that is substantially the same as the first polarization direction relative to the first liquid crystal display;
(b4) the viewing display is further optically coupled to receive at least a portion of the second color light component from the second liquid crystal display; and
(b5) the first orientation direction and the second orientation direction of the second liquid crystal display are each rotationally offset from an optical mode of the second liquid crystal display in which the second polarization direction bisects a second twist angle defined by the first orientation direction and the second orientation direction of the second liquid crystal display.

3. The liquid crystal display system of claim 2 further comprising a color splitter, optically coupled between the light source and the first and second liquid crystal displays, to selectively provide the first color light component and the second color light component.

4. The liquid crystal display system of claim 3 further comprising a polarizing beam splitter optically coupled between the light source and the color splitter, wherein the polarizing beam splitter provides light comprising the first color component and the second color component in a polarized form.

5. The liquid crystal display system of claim 2 further comprising:
(a) a third liquid crystal display comprising:
(a1) a liquid crystal material;
(a2) a first orientation layer to impart a first orientation direction to a first region of the liquid crystal material; and
(a3) a second orientation layer to impart a second orientation direction to a second region of the liquid crystal material; and
(b) wherein:
(b1) the third liquid crystal display is optically coupled to the light source and is adapted to receive a third color light component;
(b2) the third color light component has a third polarization direction relative to the third liquid crystal display that is substantially the same as the first polarization direction relative to the first liquid crystal display;
(b3) the viewing display is further optically coupled to receive at least a portion of the third color light component from the third liquid crystal display; and
(b4) the first orientation direction and the second orientation direction of the third liquid crystal display are each rotationally offset from an optical mode of the third liquid crystal display in which the polarization direction bisects a third twist angle defined by the first orientation direction and the second orientation direction of the third liquid crystal display.

6. The liquid crystal display system of claim 5 wherein:
the first orientation direction and the second orientation direction of the first liquid crystal display are each rotationally offset by a first offset angle;
the first orientation direction and the second orientation direction of the second liquid crystal display are each rotationally offset by a second offset angle;
the first color light component corresponds to red light;
the second color light component corresponds to green light;
the first offset angle is greater than the second offset angle;
the first orientation direction and the second orientation direction of the third liquid crystal display are each rotationally offset by a third offset angle;
the third color light component corresponds to blue light; and
the third offset angle is between the first offset angle and the second offset angle.

7. The liquid crystal display system of claim 2 wherein:
the first orientation direction and the second orientation direction of the first liquid crystal display are each rotationally offset by a first offset angle;
the first orientation direction and the second orientation direction of the second liquid crystal display are each rotationally offset by a second offset angle;
the first offset angle corresponds to a substantial optimization of photopic contrast for a first wavelength range of light corresponding to the first color light component; and
the second offset angle corresponds to a substantial optimization of photopic contrast for a second wavelength range of light corresponding to the second color light component.

8. The liquid crystal display system of claim 2 wherein:
the first orientation direction and the second orientation direction of the first liquid crystal display are each rotationally offset by a first offset angle;
the first orientation direction and the second orientation direction of the second liquid crystal display are each rotationally offset by a second offset angle;
the first and second orientation layers of the first liquid crystal display are rubbed to provide the first offset angle;
the first and second orientation layers of the second liquid crystal display are rubbed to provide the second offset angle; and
the first offset angle and second offset angle are different.

9. The liquid crystal display system of claim 8 wherein the first and second offset angles are different by at least about 0.5 degrees.

10. The liquid crystal display system of claim 2 wherein:
the first orientation direction and the second orientation direction of the first liquid crystal display are each rotationally offset by a first offset angle;
the first orientation direction and the second orientation direction of the second liquid crystal display are each rotationally offset by a second offset angle;
the first color light component corresponds to red light;
the second color light component corresponds to green light; and
the first offset angle is greater than the second offset angle.

11. The liquid crystal display system of claim 1 wherein the first orientation direction and the second orientation direction are each rotationally offset by substantially the same rotational angle.

12. The liquid crystal display system of claim 11 wherein the rotational angle is greater than about 0.5 degrees and less than about 10 degrees.

13. The liquid crystal display system of claim 11 wherein the rotational angle is less than about 5 degrees.

14. The liquid crystal display system of claim 1 wherein the first orientation direction and the second orientation direction are offset sufficiently to improve a photopic contrast, provided by the liquid crystal display, relative to the optical mode.

15. The liquid crystal display system of claim 1 wherein the first orientation direction and the second orientation direction are offset by slight rotational angles.

16. The liquid crystal display system of claim 1 wherein the first orientation direction and the second orientation direction are rotationally offset by rotating the liquid crystal display by an offset rotational angle relative to the polarization direction.

17. The liquid crystal display system of claim 1 wherein:
the first orientation layer is formed by rubbing at a first rubbing angle;
the second orientation layer is formed by rubbing at a second rubbing angle; and
the first orientation direction and the second orientation direction are rotationally offset by offsetting the first and second rubbing angles by an offset rotational angle.

18. The liquid crystal display system of claim 2 further comprising a polarizing beam splitter optically coupled between the light source and the first liquid crystal display, wherein the polarizing beam splitter is operable to provide polarized light comprising the first color light component to the first liquid crystal display .

19. The liquid crystal display system of claim 18 wherein the polarizing beam splitter selectively provides the polarized light as an S-component of light.

20. The liquid crystal display system of claim 18 further comprising a color splitter optically coupled between the polarizing beam splitter and the first liquid crystal display for selectively providing the first color light component.

21. The liquid crystal display system of claim 1 wherein the liquid crystal display is a twisted nematic liquid crystal display.

22. The liquid crystal display system of claim 1 wherein the viewing display is a screen for an projected image or is a viewer for direct viewing by a user.

23. The liquid crystal display system of claim 1 wherein the first and second orientation directions are sufficiently rotationally offset to provide a dark state reflectivity peak amplitude reduction for the liquid crystal display of at least about 25 percent relative to the optical mode.

24. The liquid crystal display system of claim 1 wherein the first and second orientation directions are sufficiently rotationally offset to provide a dark state reflectivity peak amplitude reduction for the liquid crystal display of at least about 35 percent relative to the optical mode.

25. The liquid crystal display system of claim 1 wherein the first and second orientation directions are sufficiently rotationally offset to provide a dark state reflectivity peak amplitude reduction for the liquid crystal display of between about 25 to 85 percent relative to the optical mode.

26. The liquid crystal display system of claim 1 wherein the first and second orientation directions are sufficiently rotationally offset to provide a dark state reflectivity peak amplitude reduction for the liquid crystal display of between about 35 to 50 percent relative to the optical mode.

27. A display kit comprising a liquid crystal display adapted to receive incoming linearly-polarized light, wherein the liquid crystal display comprises:
a pixel array wherein the incoming linearly-polarized light has a first polarization direction relative to the pixel array;
a liquid crystal material;
a first orientation layer to impart a first orientation direction to a first region of the liquid crystal material;
a second orientation layer to impart a second orientation direction to a second region of the liquid crystal material; and
wherein:
(i) the liquid crystal material is disposed between the first orientation layer and the second orientation layer; and
(ii) the first orientation direction and the second orientation direction are each rotationally offset by a first offset angle from an optical mode of the liquid crystal display in which the polarization direction bisects a first twist angle defined by the first orientation direction and the second orientation direction.

28. The display kit of claim 27 wherein the liquid crystal display is a first liquid crystal display and the polarization direction is a first polarization direction, and further comprising:
(a) a second liquid crystal display adapted to receive incoming linearly-polarized light having a second polarization direction, wherein the second liquid crystal display comprises:
(a1) a pixel array wherein the second polarization direction relative to the pixel array of the second liquid crystal display is substantially the same as the first polarization direction relative to the pixel array of the first liquid crystal display;
(a2) a liquid crystal material;
(a3) a first orientation layer to impart a first orientation direction to a first region of the liquid crystal material;
(a4) a second orientation layer to impart a second orientation direction to a second region of the liquid crystal material; and
(a5) wherein:
(i) the liquid crystal material is disposed between the first orientation layer and the second orientation layer; and
(ii) the first orientation direction and the second orientation direction are each rotationally offset by a second offset angle from an optical mode of the second liquid crystal display in which the second polarization direction bisects a second twist angle defined by the first orientation direction and the second orientation direction of the second liquid crystal display; and
(b) wherein:
(b1) the first liquid crystal display is adapted to provide a first color light component for forming an image on a display;
(b2) the second liquid crystal display is adapted to provide a second color light component for forming the image: and
(b3) the first liquid crystal display and the second liquid crystal display are adapted to cooperate in forming the image.

29. The display kit of claim 28 further comprising:
(a) a third liquid crystal display adapted to receive incoming linearly-polarized light having a third polarization direction, wherein the third liquid crystal display comprises:
(a1) a pixel array wherein the third polarization direction relative to the pixel array of the third liquid crystal display is substantially the same as the first polarization direction relative to the pixel array of the first liquid crystal display;
(a2) a liquid crystal material;
(a3) a first orientation layer to impart a first orientation direction to a first region of the liquid crystal material;
(a4) a second orientation layer to impart a second orientation direction to a second region of the liquid crystal material; and
(a5) wherein:
(i) the liquid crystal material is disposed between the first orientation layer and the second orientation layer; and
(ii) the first orientation direction and the second orientation direction are each rotationally offset by a third offset angle from an optical mode of the third liquid crystal display in which the third polarization direction bisects a third twist angle defined by the first orientation direction and the second orientation direction of the third. liquid crystal display; and
(b) wherein:
(b1) the third liquid crystal display is adapted to provide a third color light component for forming the image; and
(b2) the first liquid crystal display, the second liquid crystal display, and the third liquid crystal display are adapted to cooperate in forming the image.

30. The display kit of claim 27 wherein the liquid crystal display further comprises:
a reflective layer underlying the second orientation layer; and
a dielectric layer disposed between the reflective layer and the second orientation layer.

31. The display kit of claim 30 wherein the reflective layer comprises aluminum.

32. The display kit of claim 30 wherein the dielectric layer comprises at least one compound selected from the group consisting of a silicon nitride and a silicon oxide.

33. The display kit of claim 32 wherein the silicon oxide is silicon dioxide.

34. The display kit of claim 32 wherein the liquid crystal display further comprises a silicon substrate underlying the reflective layer.

35. The display kit of claim 30 wherein the first and second orientation layers comprise a polyimide material.

36. A method of manufacturing a liquid crystal display system comprising a first liquid crystal display, having a first twist angle, for receiving a first color light component having a first polarization direction relative to the first liquid crystal display and a second liquid crystal display, having a second twist angle, for receiving a second color light component that is substantially complementary to the first color light component and has a second polarization direction relative to the second liquid crystal display substantially the same as the first polarization direction relative to the first liquid crystal display, the method comprising:
forming the first liquid crystal display to have a first offset angle relative to an optical mode of the first liquid crystal display in which the first polarization direction bisects the first twist angle, wherein the first offset angle is adjusted to improve photopic contrast for the first color light component; and
forming the second liquid crystal display to have a second offset angle relative to an optical mode of the second liquid crystal display in which the second polarization direction bisects the second twist angle, wherein the second offset angle is adjusted to improve photopic contrast for the second color light component.

37. The method of claim 36 wherein the first liquid crystal display comprises first and second orientation layers, corresponding to respective first and second orientation directions, surrounding a liquid crystal material and the method further comprises rubbing the first and second orientation layers with a rotational offset from the first and second orientation directions to provide the first and second offset angles.

38. The method of claim 37 wherein:
the first liquid crystal display is formed as one of many displays on a first semiconductor wafer, wherein all displays on the first semiconductor wafer are formed with the first offset angle; and
the second liquid crystal display is formed as one of many displays on a second semiconductor wafer, wherein all displays on the second semiconductor wafer are formed with the second offset angle.

39. The method of claim 36 further comprising:
selecting the first offset angle to provide a substantially optimized photopic contrast relative to the optical mode of the first liquid crystal display; and
selecting the second offset angle to provide a substantially optimized photopic contrast relative to the optical mode of the second liquid crystal display.

40. The method of claim 39 further comprising:
selecting a first photopic contrast minimum value for the first color light component; and
adjusting a first on state voltage and the first offset angle for the first liquid crystal display to provide a photopic contrast for the first color light component that is equal to or greater than the first photopic contrast minimum standard.

41. The method of claim 40 further comprising:
selecting a second photopic contrast minimum value for the second color light component; and
adjusting a second on state voltage and the second offset angle for the second liquid crystal display to provide a photopic contrast for the second color light component that is equal to or greater than the second photopic contrast minimum standard.

42. A liquid crystal display system comprising:
(a) a liquid crystal display comprising:
(a1) a liquid crystal material;
(a2) a first orientation layer to impart a first orientation direction to a first region of the liquid crystal material; and
(a3) a second orientation layer to impart a second orientation direction to a second region of the liquid crystal material;
(b) a light source;
(c) a viewing display optically coupled to receive light from the liquid crystal display; and
(d) wherein:
(d1) the liquid crystal display is optically coupled to the light source and is operable to receive incoming light, wherein the incoming light is polarized and has a polarization direction relative to the liquid crystal display; and
(d2) the first orientation direction and the second orientation direction are each rotationally offset relative to the polarization direction of the incoming light to improve photopic contrast.

43. The liquid crystal display system of claim 42 wherein the first orientation direction and the second orientation direction are each rotationally offset by less than about 10 degrees.

44. A liquid crystal display system comprising:
(a) a liquid crystal display comprising:
(a1) a liquid crystal material;
(a2) a first orientation layer to impart a first orientation direction to a first region of the liquid crystal material; and
(a3) a second orientation layer to impart a second orientation direction to a second region of the liquid crystal material;
(b) a light source;
(c) a viewing display optically coupled to receive light from the liquid crystal display; and
(d) wherein:
(d1) the liquid crystal display is optically coupled to the light source and is operable to receive incoming light, wherein the incoming light is polarized and has a polarization direction relative to the liquid crystal display; and
(d2) the first orientation direction and the second orientation direction are each rotationally offset from an optical mode of the liquid crystal display in which the polarization direction of the incoming light divides a twist angle defined by the first orientation direction and the second orientation direction.

45. The liquid crystal display system of claim 44 wherein the first orientation direction and the second orientation direction are each rotationally offset by less than about 10 degrees.
